# EUROPÄISCHE PATENTSCHRIFT

(11) **EP 1 369 761 B1**
(45) Veröffentlichungstag und Bekanntmachung des Hinweises auf die Patenterteilung: **29.03.2006**
(21) Anmeldenummer: 03012663.5
(22) Anmeldetag: 04.06.2003
(51) Int. Cl.: G05D 23/02

(54) **Hochtemperaturbeständiges Bimaterialelement**
High temperature resistant bimaterial element
Elément bi-matériaux résistant aux hautes températures

(30) Priorität: 08.06.2002 DE 10225453
(43) Veröffentlichungstag der Anmeldung: 10.12.2003
(73) Patentinhaber: Deutsches Zentrum für Luft- und Raumfahrt e.V., 51147 Köln (DE)
(72) Erfinder: Schulz, Uwe, 53819 Neunkirchen-Seelscheid (DE); Hoffschmidt, Bernhard, Dr., 51467 Bergisch Gladbach (DE); Fend, Thomas, Dr., 51143 Köln (DE); Rietbrock, Peter, 51147 Köln (DE)
(74) Vertreter: Selting, Günther

(56) Entgegenhaltungen:
- DE-C- 19 736 335
- US-A- 3 002 386
- US-A- 5 302 340

## Beschreibung

Die Erfindung betrifft ein hochtemperaturbeständiges Bimaterialelement mit temperaturabhängiger Deformation, mit einem Substrat und einer darauf angeordneten Sekundärschicht.

Bekannt sind Bimetallelemente, die aus zwei dünnen Metallplatten mit unterschiedlichen thermischen Ausdehnungskoeffizienten bestehen. Bei Temperaturänderungen entsteht eine Formänderung des Bimetallelements. Derartige Bimetallelemente können dazu benutzt werden, elektrische Schaltvorgänge auszuführen oder eine Gasströmung in Abhängigkeit von der Temperatur durch mechanische Einwirkung zu beeinflussen.

Die üblichen Bimetallelemente bestehen aus einer Kombination eines ferritischen Stahls und eines austenitischen Stahls. Sie liefern aufgrund unterschiedlichen Wärmedehnungsverhaltens eine temperaturabhängige Krümmung, die bis etwa 500 °C dauerhaft reproduzierbar ist.

Im Hochtemperaturbereich von über 500 °C können Bimetallelemente nicht dauerhaft eingesetzt werden, da sie wegen Versprödung des Materials bei hohen Temperaturen nicht hinreichend formbeständig sind. Bei Gasströmungen in Rohrleitungen im Temperaturbereich von 500 °C - 1000 °C besteht häufig das Problem einer fehlenden passiven Regelungsmöglichkeit. Derartige Anwendungsfälle ergeben sich bei Receiversystemen für solare Turmkraftwerke und bei Wärmeübertragern. Im ersten Fall soll der Strömungswiderstand einer Rohrleitung temperaturabhängig erniedrigt werden. Im zweiten Fall besteht das Problem darin, einen Luftstrom temperaturabhängig durch ein alternatives Leitungssystem zu führen.

In DE 197 36 335 C1 ist eine hochtemperaturbeständige Blende zur Regulierung der Fluidströmung in einem Absorberrohr eines solarthermischen Kraftwerks beschrieben. Die Blende weist einen Draht aus hochtemperaturfestem Material auf, der an einem Ende fixiert ist und dessen anderes Ende ein Bewegungselement der Blende verstellt. Der Draht verläuft innerhalb eines Führungskanals.

In DE 2 133 341 A ist ein Bimaterialelement beschrieben, das aus zwei flach aufeinander liegenden Keramikplättchen besteht, von denen das eine aus einer ferromagnetischen Keramik besteht, die sich bei einer bestimmten Temperatur sprunghaft ausdehnt.

Die beiden Plättchen sind dadurch miteinander verbunden, dass sie zusammengewalzt und gemeinsam gesintert sind oder metallisiert und dann miteinander verlötet sind, oder auch durch Kleben. Ein derartiges keramisches Bauelement verhindert zwar Alterungs- und Ermüdungserscheinungen bei höheren Temperaturen, ist jedoch nicht hochtemperaturbeständig in dem Sinne, dass es Temperaturen von über 500°C standhalten könnte.

In DE 100 40 591 C 1 ist die Herstellung hochtemperaturbeständiger Bauteile, z.B. für Glasschmelzwannen, beschrieben, wobei ein aus einer Keramik bestehendes feuerfestes Bauteil zunächst durch Bedampfen, Sputtern oder Plasmaspritzen mit einer Keramikbeschichtung versehen wird, die eine Unterlage für eine anschließend aufzubringende Edelmetall-Legierung bildet.

Ein hochtemperaturbeständiges Bimaterialelement, von dem der Oberbegriff des Patentanspruchs 1 ausgeht, ist beschrieben in US-A-3002386. Es handelt sich um ein Bimetallelement mit Schnappfunktion für hohe Arbeitstemperaturen. Ein Substrat besteht aus Edelstahl und ist mit einem feuerfesten keramischen Material beschichtet. Unter hohen Temperaturen wird das keramische Material geschmolzen, um in das Metall einzudiffundieren und die verglaste Keramikschicht in das Metall eindringen zu lassen. Ein anderes Verfahren sieht vor, das keramische Material durch Sprühschmelzen in das Metall einzubringen.

Der Erfindung liegt die Aufgabe zugrunde, ein hochtemperaturbeständiges Bimaterialelement mit verbesserten Eigenschaften zu schaffen.

Das erfindungsgemäße Bimaterialelement ist durch den Patentanspruch 1 definiert. Hiernach ist vorgesehen, dass die keramische Sekundärschicht, die über einem aus Metall oder Keramik bestehenden Substrat angeordnet ist, aus einer mittels PVD (Physical Vapor Deposition) aufgebrachten Schicht mit erhöhter Porosität und einer Gefügestruktur in hauptsächlich kolumnarer Anordnung besteht.

Das Substrat und die Sekundärschicht haben unterschiedliche thermische Ausdehnungskoeffizienten. Die Materialien von Substrat und Sekundärschicht haben wegen ihrer Hochtemperaturfestigkeit und Steifigkeit gegenüber den üblichen Metallen das Potential, eine dauerhafte Funktion des Temperatur-Bewegungsverhaltens zu gewährleisten. Die Sekundärschicht besitzt aufgrund der Besonderheit ihres Gefüges einen geringeren E-Modul als auf herkömmlichem Weg hergestellte Sinterkeramik und damit die Fähigkeit, Biegebewegungen reproduzierbar auch in längerem wiederholtem Einsatz auszuführen. Die besondere Gefügestruktur mit erhöhter Porosität in hauptsächlich kolumnarer Anordnung verleiht der Keramikschicht eine ausgezeichnete Dehnungstoleranz auch bei hohen Temperaturen.

Eine mittels PVD (Physical Vapour Deposition) aufgetragene keramische Sekundärschicht hat den Vorteil einer besonderen Gefügestruktur mit erhöhter Porosität in hauptsächlich kolumnarer Anordnung.

Zusätzlich kann mit PVD oder anderen geeigneten Methoden, beispielsweise thermisches Spritzen, wie Plasmaspritzen oder Flammspritzen, eine geeignete metallische Schicht auf dem Substrat angebracht werden, die einen abweichenden Ausdehnungskoeffizienten vom Substrat hat. Je nach Wahl des Ausdehnungskoeffizienten wird diese Metallschicht entweder unter dem Substrat oder auf der gegenüberliegenden Seite angebracht.

Zur Verbesserung der Haftung der Sekundärschicht kann eine Haftvermittlungsschicht auf das Substrat aufgebracht werden.

Die Erfindung betrifft ferner die Verwendung eines hochtemperaturbeständigen Bimetallelements in einer Blende zur Regelung eines Heißgasstromes, wobei ein Blendenelement zwei Füße aufweist, die als Bimaterialelemente ausgebildet sind. Vorzugsweise sind die Füße, die im Wesentlichen parallel verlaufen, durch einen bogenförmigen Teil des Blendenelements verbunden.

Anwendungen für das erfindungsgemäße Bimaterialelement ergeben sich in der Kraftwerkstechnologie und in der Abgastechnologie von Fahrzeugen, insbesondere bei Katalysatoren.

Im Folgenden wird unter Bezugnahme auf die Zeichnungen ein Ausführungsbeispiel der Erfindung näher erläutert.

Es zeigen:
- Fig. 1: einen Querschnitt durch ein hochtemperaturbeständiges Bimetallelement,
- Fig. 2: eine Blende zur Regelung eines Heißgasstromes, wobei das bewegbare Blendenelement durch zwei Füße mit dem festen Teil der Blende verbunden ist,
- Fig. 3: eine Seitenansicht der Blende nach Figur 2 im kalten Zustand, und
- Fig. 4: eine Seitenansicht der Blende nach Figur 2 im warmen Zustand.

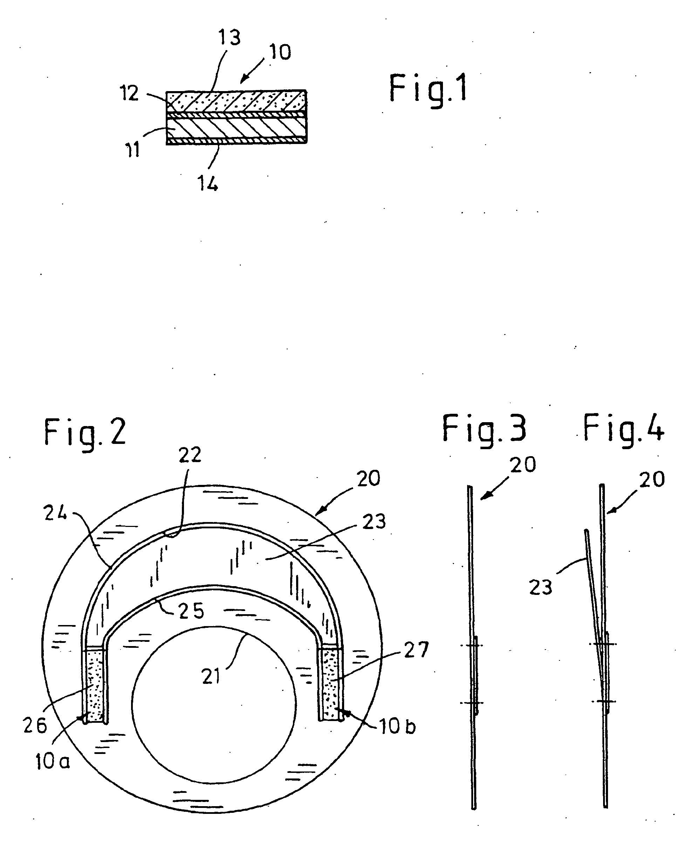

Figur 1 zeigt einen Querschnitt durch ein hochtemperaturbeständiges Bimaterialelement 10. Dieses weist ein Substrat 11 auf, das aus einem 100 *µ*m starken Plättchen aus Hochtemperaturstahl besteht. Insbesondere haben sich Chrom-Nickel-Stähle als geeignet erwiesen und zwar besonders der Stahl x12CrN 25 21. Eine Seite des Substrats ist mit einer Haftvermittlungsschicht 12 beschichtet, die aus NiCoCrAIY von 50 *µ*m Stärke besteht. Auf die Haftvermittlungsschicht ist die Sekundärschicht 13 mittels PVD (Physical Vapour Depositon) aufgebracht. Die Sekundärschicht besteht aus Keramikmaterial, insbesondere aus Zirkoniumoxid (ZrO₂) .

Auf der Rückseite des Substrats 11 befindet sich eine weitere Schicht 14 aus dem selben Material wie die Haftvermittlungsschicht 12.

Die Figuren 2, 3 und 4 zeigen eine Blende 20 oder Drossel, die in einem Rohr verwendet werden kann, um einen Heißgasstrom, der beispielsweise in dem Receivermodul eines Solarkraftwerks erzeugt wurde, zu regeln. Die Blende 20 besteht aus einer Metallplatte aus dem Material des Substrats 11. Diese Metallplatte weist eine permanente Öffnung 21 auf und eine zu regelnde Öffnung 22. In der Öffnung 22 befindet sich ein Blendenelement 23 mit temperaturabhängiger Auslenkung. Das Blendenelement 23 ist aus dem Material der Blende 20 durch Schnittspalte 24 und 25 herausgeschnitten. Die Schnittspalte 24 und 25 haben jeweils einen bogenförmigen Bereich und sie setzen sich dann in geraden Abschnitten fort, welche jeweils ein Bein 26, 27 des Blendenelements 23 begrenzen. Die Beine 26, 27 verlaufen parallel. Im Bereich dieser Beine ist das Substrat 11 durch den in Figur 1 dargestellten Aufbau zu einem Bimaterialelement 10 komplettiert, so dass sich zwei Bimaterialelemente 10a, 10b ergeben, die den Bogen des Blendenelements 23 halten.

Figur 3 zeigt den Zustand der Blende 20 nach dem Beschichten der entsprechenden Bereiche im kalten Zustand. In diesem Zustand ist die Öffnung 22 verschlossen, da sich das Blendenelement 23 in der Ebene der Blende 20 befindet. Bei ausgelenktem Blendenelement wird die Öffnung 22 vergrößert. Der Strömungsquerschnitt der Blende, der sich aus der Summe der Öffnungen 21 und 22 ergibt, ist daher gering.

Bei hohen Temperaturen entsteht ein Verzug, so dass das Blendenelement 23 gemäß Figur 4 ausgelenkt wird. Dadurch wird bei hohen Gastemperaturen der Blendenwiderstand erhöht. Die Bimaterialelemente 10a, 10b sind so eingestellt, dass eine Vergrößrung der Öffnung 22 bei einer Temperatur von 650 °C beginnt. Bei weiterer Temperaturerhöhung wird die Blende weiter geöffnet.

## Patentansprüche

1. Hochtemperaturbeständiges Bimaterialelement mit temperaturabhängiger Deformation, mit einem Substrat (11) aus Metall oder Keramik und einer darauf angeordneten keramischen Sekundärschicht (13),
**dadurch gekennzeichnet,**
**dass** die keramische Sekundärschicht (13) aus einer mittels PVD aufgebrachten Schicht mit erhöhter Porosität und einer Gefügestruktur in hauptsächlich kolumnarer Anordnung besteht.

2. Bimaterialelement nach Anspruch 1, **dadurch gekennzeichnet, dass** das Substrat (11) aus hochtemperaturbeständigem Stahl besteht und die Sekundärschicht (13) aus ZrO₂.

3. Bimaterialelement nach Anspruch 1 oder 2, **dadurch gekennzeichnet, dass** zwischen Substrat (11) und Sekundärschicht (13) eine Haftvermittlungsschicht (12) angeordnet ist.

4. Bimaterialelement nach einem der Ansprüche 1-3, **gekennzeichnet durch** seine Verwendung in einer Blende (20) zur Regelung eines Heißgasstromes, wobei ein Blendenelement (23) zwei Füße (26, 27) aufweist, die als Bimaterialelemente (10a, 10b) ausgebildet sind.

5. Bimaterialelement nach Anspruch 4, **dadurch gekennzeichnet, dass** die beiden Füße (26, 27) im Wesentlichen parallel und durch einen bogenförmigen Teil des Blendenelements (23) verbunden sind.

## Claims

1. High temperature resistant bimaterial element having temperature-dependant deformation, comprising a substrate (11) of metal or ceramics and a ceramic secondary layer (13) provided thereon,
**characterized in**
**that** the ceramic secondary layer (13) consists of a layer of increased porosity and a mainly columnar microstructure, said layer being applied by PVD.

2. Bimaterial element of claim 1, **characterized in that** the substrate (11) is made of high temperature resistant steel and the secondary layer (13) is made of ZrO₂.

3. Bimaterial element of claim 1 or 2, **characterized in that** a bonding layer (12) is provided between the substrate (11) and the secondary layer (13).

4. Bimaterial element of one of claims 1-3, **characterized in that** it is used in a shutter (20) for controlling a flow of hot gas, a shutter element (23) having two feet (26, 27) configured as bimaterial elements (10a, 10b).

5. Bimaterial element of claim 4, **characterized in that** the two feet (26, 27) are substantially parallel and are connected by an arcuate part of the shutter element (23).

## Revendications

1. Elément de bimatériau résistant aux températures élevées avec déformation dépendant de la température, comprenant un substrat (11) en métal ou céramique et une couche secondaire (13) céramique disposée dessus,
**caractérisé en ce que**
la couche secondaire (13) céramique est constituée d'une couche appliquée par PVD avec une porosité élevée et une structure de texture dans un agencement principalement en colonne.

2. Elément de bimatériau selon la revendication 1, **caractérisé en ce que** le substrat (11) est à base d'acier résistant aux températures élevées et **en ce que** la couche secondaire (13) est à base de ZrO₂.

3. Elément de bimatériau selon la revendication 1 ou 2, **caractérisé en ce qu'**une couche d'adhérence (12) est disposée entre le substrat (11) et la couche secondaire (13).

4. Elément de bimatériau selon l'une quelconque des revendications 1 à 3, **caractérisé par** son utilisation dans un obturateur (20) pour le réglage d'un flux de gaz chaud, un élément d'obturateur (23) présentant deux pieds (26, 27), qui sont conçus comme des éléments de bimatériau (10a, 10b).

5. Elément de bimatériau selon la revendication 4, **caractérisé en ce que** les deux pieds (26, 27) sont sensiblement parallèles et reliés par une partie en forme d'arc de l'élément d'obturateur (23).
